# EUROPEAN PATENT APPLICATION

(11) **EP 1 928 158 A1**
(43) Date of publication of application: **04.06.2008**
(21) Application number: 07114241.8
(22) Date of filing: 13.08.2007
(51) Int. Cl.: H04M 1/02

(54) **Mobile phone for multimedia with self-cradling function**

(30) Priority: 11.08.2006 KR 20060076409
(71) Applicant: Samsung Electronics Co., Ltd., Suwon-si, Gyeonggi-Do (KR)
(72) Inventor: Lee, Sung-Ho c/o Samsung Electronics Co., Ltd., Gyeonggi-do (KR); Kim, Joon-Suh c/o Samsung Electronics Co., Ltd., Gyeonggi-do (KR); Lee, Chang-Soo c/o Samsung Electronics Co., Ltd., Gyeonggi-do (KR)
(74) Representative: Grünecker, Kinkeldey, Stockmair & Schwanhäusser Anwaltssozietät

(57) **Abstract**

A mobile phone (10) for multimedia with a self-cradling function. The mobile phone (10) includes a data output device; a data input device rotatably connected to the data output device about a hinge axis (A), the top and bottom surfaces of the data input device being reversed upside down according to rotation of the data input device regardless of opening and closing of the data output device, so the data input device and the data output device are oriented at an incline in relation to each other; and a cradle unit (300) including one or more hinge surfaces (310,320) for cradling the data output device at an incline in relation to the data input device.

## Description

### BACKGROUND OF THE INVENTION

### 1. Field of the Invention

The present invention generally relates to a mobile phone, such as a Digital Multimedia Broadcasting (DMB) phone, a game phone, a chatting phone, a camera phone, a Moving Picture Experts Group Layer 3 (MP3) phone, a cellular phone, a Personal Communication System (PCS), a Personal Digital Assistant (PDA ),a Hand Held Phone (HHP), etc., and in particular, to a mobile phone for multimedia, which has a self-cradling function and is convenient to use in various modes including a phone mode.

### 2. Description of the Related Art

Typically, a "mobile phone" refers to an appliance for use in wireless communication with a counterpart while being carried by a user. For example, wireless communication includes, but is not limited to, voice communication, message transmission, file transmission, image communication, etc. In addition, a mobile phone may also have a camera function and may also serve as a private secretary for managing phone numbers, private schedules or the like.

Considering convenient portability, mobile phones are continuously becoming more and more miniaturized, slimmer, lighter and adapted to be conveniently gripped and are developed toward multimedia appliances capable of implementing more various service functions, for which entertainment contents such as games or recreation are regarded as important. In the future, mobile phones are expected to have multiple and composite functions including, for example, functions of image communication, game, Internet access, camera, etc., beyond a simple voice communication function.

Conventional mobile phones may be classified, for example, into a bar-type communication apparatus and a folder-type communication apparatus according to the appearances thereof considering portability, convenience of use, etc. A bar-type communication apparatus refers to an apparatus with a single housing formed in a bar-type including a data input and output device, an antenna device, and a transceiver. A folder-type communication apparatus means an apparatus with a folder rotatably connected to a bar-type housing via a hinge device in such a manner that the folder is collapsible in relation to the housing. Such a folder-type mobile phone is configured in such a manner that a folder is rotatably connected to a main body via a hinge, in which keys are arranged on the main body and a display is arranged on the folder, which is advantageous in miniaturization and portability of the mobile phone. An example of such a mobile phone is shown in U.S. Patent No. 6,865,406 B2, where a camera lens housing is mounted in the hinge of the folder-type mobile phone.

Mobile phones may also be classified into a swing-type communication apparatus and a sliding-type communication apparatus according to open/close methods thereof. A swing-type communication apparatus has two housings coupled to be opposed to and in contact with each other, in which one of the two housings is capable of swinging in relation to the other while the two housings are continuously in contact with each other so that the other housing is opened or closed. A sliding-type communication apparatus has two housings coupled to be opposed to and in contact with each other, in which one of the two housings is longitudinally slidable so that the other housing is opened or closed.

A sliding-type mobile phone is configured in such a manner that a main body and a slider are coupled through a sliding module to be opposed to and in contact with each other, wherein a plurality of keys are arranged on the main body, and a display unit is arranged on the slider, which is advantageous in providing a wide display unit and convenient for opening or closing the mobile phone. An example of such a sliding-type mobile phone is shown in U.S. Patent No. 6,822,871 B2, where a plurality of keys are arranged on a main housing and a display unit is arranged on a sliding housing.

Such conventional mobile phones may not be so inconvenient for inputting data or confirming displayed data in a phone mode for voice communication or letter message transmission. However, when mobile phones are configured with higher multimedia functions, in particular, with a moving image related mode, conventional mobile phones do not easily enable a user to watch a picture displayed on the display unit and are inconvenient. In order to enable a user to conveniently watch a displayed picture, a display unit should be cradled to be substantially inclined with reference to a user. For this purpose, a separate cradle can be provided, which is not economical.

The above-mentioned problems can be solved if the entire size of a mobile phone is increased to mount a wide display unit, where more keys are arranged in the mobile phone, and a separate cradle is provided. However, this goes against the miniaturization of a mobile phone, and makes carrying such a mobile phone difficult. In addition, economics should be considered when buying such a mobile phone.

Therefore, a need exists for a mobile phone which is convenient to use in various modes including a moving image watching related mode, as well as in a phone mode. In particular, a need exists for a mobile phone which is convenient for watching a display unit in various modes.

### SUMMARY OF THE INVENTION

The present invention substantially solves the above-mentioned problems occurring in the conventional art. Therefore, it is the object of the present invention to provide an economical mobile phone with a self-cradling function. This object is solved by the subject matter of the independent claims. Preferred embodiments are defined in the dependent claims.

The present invention also provides an embodiment of a mobile phone, which can be conveniently cradled.

The present invention additionally provides an embodiment of a mobile phone convenient for watching a picture displayed on a display unit in moving image related modes.

The present invention additionally provides an embodiment of a mobile phone in which can hold a pair of stereo speakers mounted on the mobile phone.

The present invention additionally provides an embodiment of a mobile phone having at least two abutment projections for supporting the mobile phone, wherein the projections also serve as a microphone.

The present invention additionally provides an embodiment of a mobile phone with a cradle unit formed from a metallic material for increasing the life span of the mobile phone.

According to an aspect of the present invention, there is provided a self-cradling mobile phone having a first housing rotatably connected to a second housing so the first housing is horizontally aligned with the second housing in a first position and the first housing is inclined with respect to the second housing in a second position.

According to another aspect of the present invention, there is provided a mobile phone for multimedia with a cradling function, the mobile phone including a data output device; a data input device rotatably connected to the data output device about a hinge axis, top and bottom surfaces of the data input device being reversed upside down according to rotation of the data input device regardless of opening and closing of the data output device, so the data input device and the data output device are oriented at an incline in relation to each other; and a cradle unit including one or more hinge surfaces for cradling the data output device at an incline in relation to the data input device.

### BRIEF DESCRIPTION OF THE DRAWINGS

The above object and other aspects, features and advantages of the present invention will be more apparent from the following detailed description taken in conjunction with the accompanying drawings, in which:
FIG. 1 is a perspective view of a mobile phone according to the present invention;
FIG. 2 is a side view showing the mobile phone of FIG. 1;
FIG. 3 is a perspective view showing the mobile phone in the course of being rotated according to the present invention;
FIG. 4 is a perspective view showing the mobile phone cradled to be inclined according to the present invention;
FIG. 5 is a side view showing the mobile phone of FIG. 4; and
FIG. 6 is a perspective view showing the condition of using the mobile phone, in which a pair of stereo speakers is added in a state in which the mobile phone is cradled to be inclined according to the present invention.

### DETAILED DESCRIPTION OF THE PREFERRED EMBODIMENTS

Preferred embodiments of the present invention will now be described with reference to the accompanying drawings. In the following description, the same elements will be designated by the same reference numerals even though they are shown in different drawings.

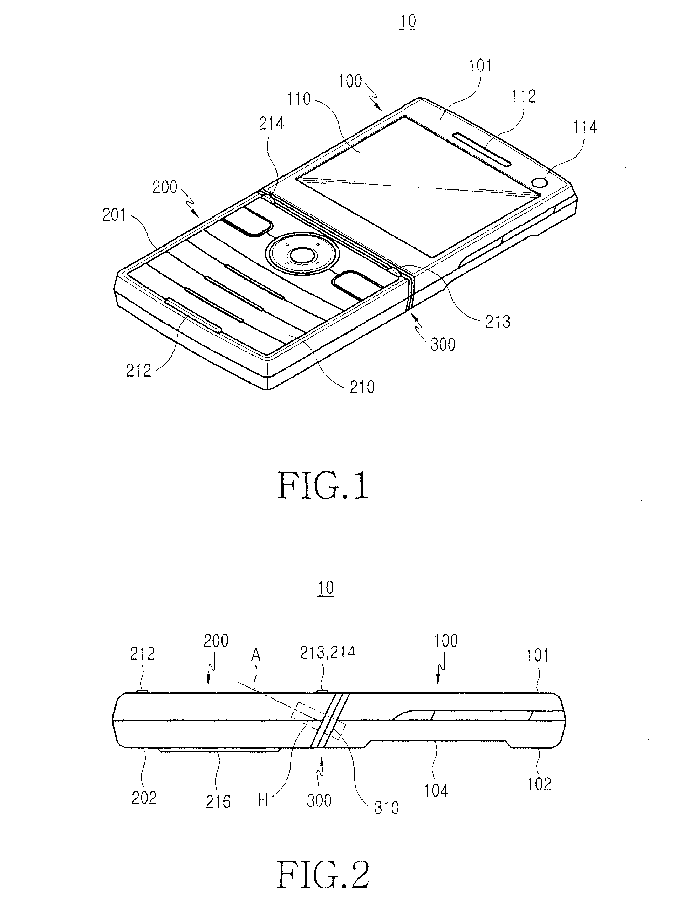

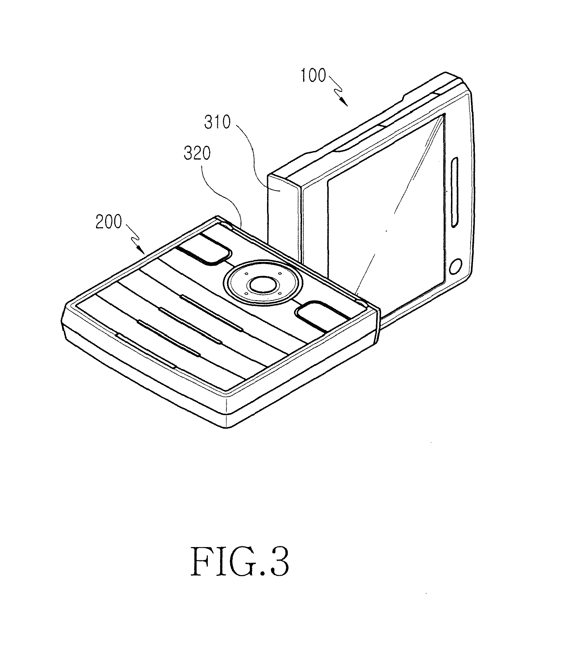

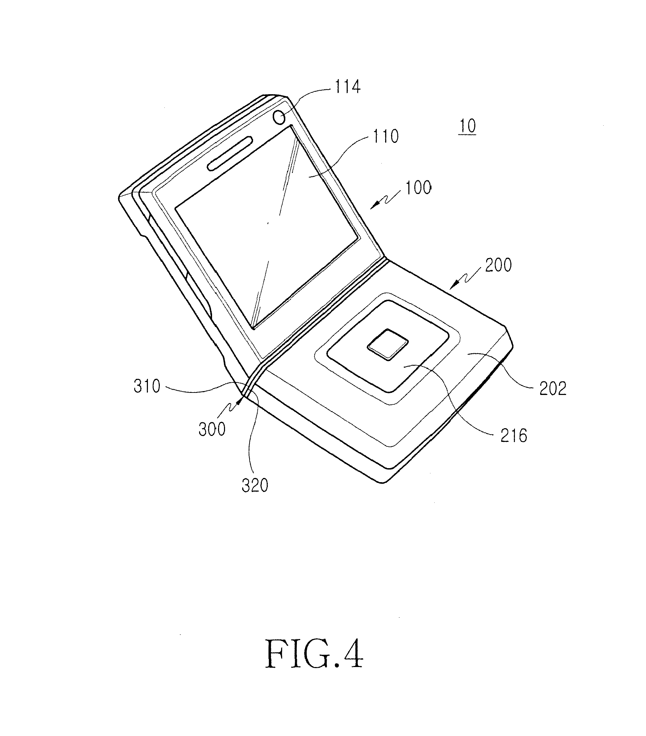

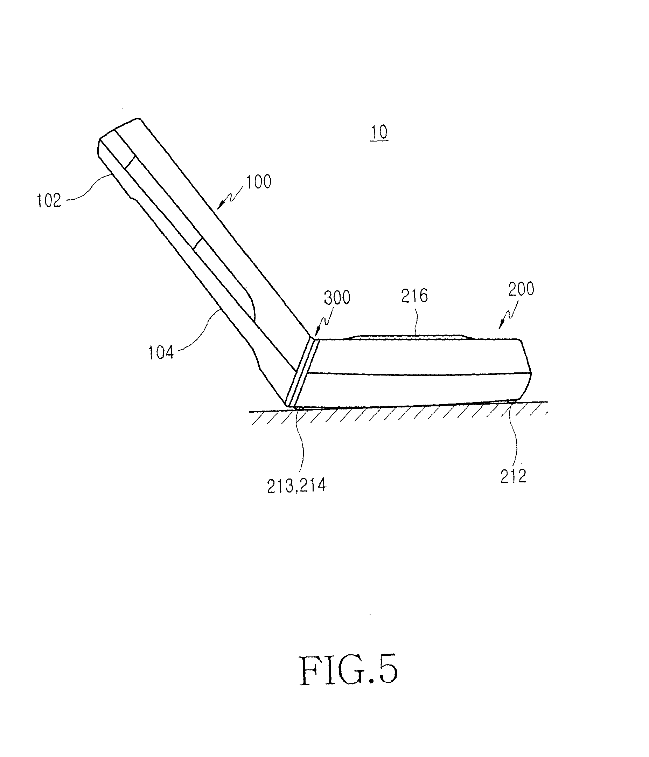

A mobile phone 10 according to the present invention is shown in FIGs. 1 to 5. The mobile phone 10 is a portable communication terminal with a self-cradling function. The mobile phone 10 may be configured in various ways including, for example, a Digital Multimedia Broadcasting (DMB) phone, a game phone, a chatting phone, a camera phone, an MP3 phone, a cellular phone, a Personal Communication System (PCS), a Personal Digital Assistant (PDA), a Hand Held Phone (HHP), etc. The mobile phone 10 includes first and second housings 100 and 200, and a cradle unit 300 interposed between the first and second housings 100 and 200 so as to cradle a display unit 110 to be inclined merely through a rotation thereof. The second housing 200 is rotated in relation to the first housing 100 and is arranged by the cradle unit 300 so the first and second housings 100 and 200 are oriented at an incline in relation to each other. That is, if the second housing 200 is in a horizontal position (e.g., in contact with the ground) after the above-mentioned rotation, the first housing 100 is cradled in an inclined position in relation to the second housing 200. FIG 3 shows a condition where the second housing 200 is in the course of rotating , and FIGs. 4 and 5 show a condition where the first housing 100 is cradled at an incline in relation to the second housing 200.

The second housing 200 is rotatable about a hinge axis A, as shown in FIG 2, wherein the hinge axis A is inclined in relation to the vertical direction of the top surface 101 of the first housing 100. Upon rotating about 180 degrees, the second housing 200 takes an inclined orientation in relation to the first housing 100 in a state in which the top and bottom surfaces 201 and 202 are reversed upside down. It should be noted that the rotation of the second housing 200 can be performed regardless of the opening/closing of the first housing 100, and in particular, regardless of the opening/closing of the top surface 101 of the first housing 100.

The first housing 100 includes at least one first user interface device. The first user interface device includes a data output device. In particular, the first user interface device includes a display unit 110 arranged on the top surface 101 of the first housing 100, a camera lens 114 arranged on the top surface 101 adjacent to the display unit 110, and a single speaker 112 arranged on the top surface 101 adjacent to the display unit 110.

As shown in FIGs. 1 and 4, the second housing 200 includes at least one second user interface device. The second user interface device includes a data input device. In particular, the second user interface device includes on the top surface of the second housing 200, a first keypad 210 having a plurality of keys, and on the bottom surface thereof a second keypad 216 having a plurality of keys. The first keypad 210 includes a 3x4 key arrangement and the second keypad 216 includes a four-direction key. A power source for the mobile phone 10 may be contained in the second housing. For example, a power source in the form of a battery pack may be contained in the data input device of the second housing 200 to provide stability for cradling the data output device in the first housing 100.

As shown in FIG 2, the cradle unit 300 includes a first inclined or hinge surface 310 formed on a side surface of the first housing 100, which is opposed to the second housing 200, a second inclined or hinge surface 320 formed on a side surface of the second housing 200, which is opposed to the first housing 100, the first hinge surface 310 being complementary with the second hinge surface 320, and a hinge module H mounted through the centers of the first and second hinge surfaces 310 and 320 for providing a semi-automatic drive source. Among a plurality of surfaces of the first housing 100, the first hinge surface 310 is formed on the side surface of the first housing 100, which is opposed to the second housing 200, and among a plurality of side surfaces of the second housing 200, the second hinge surface 320 is formed on the side surface of the second housing 200, which is opposed to the first housing 100. The top and bottom surfaces of each of the first and second housings 100 and 200, respectively, are not included in the side surfaces. That is, the present invention is related to a mobile phone, the first and second housings of which rotate in a state in which corresponding side surfaces (i.e., the first and second hinge surfaces) thereof are opposed to and in contact with each other.

The first and second hinge surfaces 310 and 320 may each be formed as a flat surface from a metallic material to enhance structural rigidity of the mobile phone. When the mobile phone is configured with structural rigidity, the mobile phone can inhibit or otherwise prevent structural defects, which may occur when the first and second housings 100 and 200 rotate in relation to each other. The flat surfaces also assure smooth rotation of the first and second housings 100 and 200. The hinge axis A is perpendicularly oriented in relation to the centers of the first and second hinge surfaces 310 and 320, and the hinge module H is mounted to be perpendicularly oriented in relation to the centers of the first and second hinge surfaces 310 and 320. When the second housing 200 rotates in relation to the first housing 100, the first hinge surface 310 and the second hinge surface 320 rotate in a state in which the hinge surfaces 310 and 320 are continuously opposed to and in contact with each other.

As shown in FIGs. 1, 2 and 5, at least two abutment projections 212, 213 and 214 are provided at positions on the top surface 201 of the second housing 200. The abutment projections are provided to render the first keypad 210 spaced from the ground surface in a state as shown in FIGs. 4 and 5, that is, after the second housing 200 has rotated. The abutment projections include a pair of first projections 213 and 214 formed at two opposite corners of the second housing 200 adjacent to a first edge of the top surface 201 of the second housing 200, and a second projection 212 formed at a center of an area adjacent to a second edge opposite to the first edge of the top surface 201. The second projection 212 may include a microphone. That is, the second projection 212 may have a microphone mounted, for example, at an underside thereof so the second projection serves as a microphone as well as an abutment.

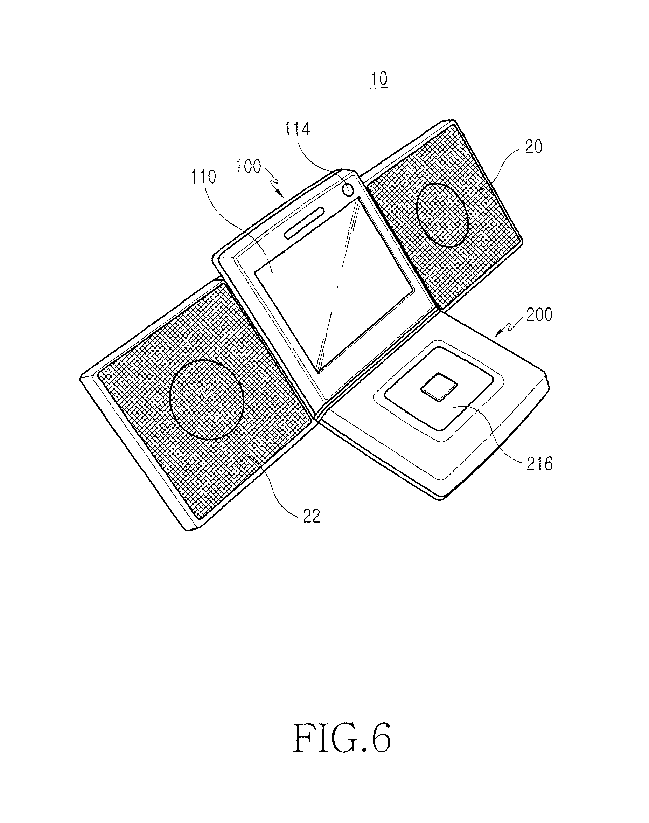

As shown in FIGs. 2 and 5, the bottom surface 102 of the first housing 100 is formed with a groove 104 recessed at a particular depth. The groove 104 is provided to facilitate convenient mounting of a pair of detachable and movable stereo speakers 20 and 22, as shown in FIG 6. Alternatively, the stereo speakers 20 and 22 may be movably and integrally connected to the first housing 100 in a manner enabling convenient mounting in the groove 104 during non-use through a foldable connection or the like, as desired. In the condition shown in FIG 6, a user may conveniently watch a picture displayed on the display unit 110, operate keys on the second keypad 216, and enjoy moving image watching related modes including, for example, a DMB mode, a television (TV) mode, an image communication mode, etc. In addition, in a digital clock mode, the mobile phone 10 may be cradled on a table so the display unit is inclined. As a result, the mobile phone 10 is capable of performing a clock function. In a digital clock mode, time related information is displayed on the display unit 110. FIG 1 shows the posture of the mobile phone when used in a phone mode.

As described above, a mobile phone according to the present invention has a self-cradling function which makes the mobile phone economical, and by which a user can conveniently watch a picture displayed on the display unit of the mobile phone in moving image watching related modes. In addition, a mobile phone according to the present invention may be easily cradled. Furthermore, by forming cradling means from a metallic material to provide structural rigidity, a mobile phone life span can be substantially increased.

While the invention has been shown and described with reference to certain preferred embodiments thereof, it will be understood by those skilled in the art that various changes in form and details may be made therein without departing from the spirit and scope of the invention as defined by the appended claims.

## Claims

1. A self-cradling mobile phone (10) having a first housing (100) rotatably connected to a second housing (200) so that the first housing (100) is horizontally aligned with the second housing (200) in a first position and the first housing (100) is inclined with respect to the second housing (200) in a second position.

2. A mobile phone according to claim 1, wherein the first housing (100) has a first top surface (101) and a first hinge surface (310) inclined to the first top surface (101).

3. A mobile phone according to claim 1 or 2, wherein the second housing (200) has a second top surface (201) and a second hinge surface (320) inclined to the second top surface (201).

4. A mobile phone according to claim 2 or 3, wherein the first and second hinge surfaces (310,320) are formed of metallic material.

5. A mobile phone according to any previous claim, further comprising a cradle unit (300) rotatably connecting the first housing (100) to the second housing (200).

6. A mobile phone according to claim 5, wherein the cradle unit (300) comprises a hinge module (H).

7. A mobile phone according to claim 6, wherein the hinge module (H) is mounted through the first hinge surface (310) and the second hinge surface (320).

8. A mobile phone according to claim 6 or 7, wherein the hinge module (H) provides a drive source.

9. A mobile phone according to any previous claim, wherein the first housing (100) has at least a first user interface comprising a data output device.

10. A mobile phone according to claim 9, wherein the data output device comprises at least one of a display unit (110), a camera lens (114), and a speaker (112,20,22).

11. A mobile phone according to claim 10, wherein the speaker (20,22) is detachable from the mobile phone (10).

12. A mobile phone according to any previous claim, wherein the second housing (200) has at least one second interface unit comprising a data input device.

13. A mobile phone according to claim 12, wherein the at least one data input device includes a first keypad (210) on the second top surface (201) and a second keypad (216) on a bottom surface (202) of the second housing (200).

14. A mobile phone according to claim 13, wherein the first keypad (210) comprises a plurality of keys.

15. A mobile phone according to claim 13 or 14, wherein the second keypad (216) comprises a directional keypad.

16. A mobile phone according to any previous claim, further comprising a plurality of abutment projections (212,213) on the second top surface (201) for raising the second top surface (201) above a resting surface when the first housing (100) is in the inclined second position with respect to the second housing (200).

17. A mobile phone according to claim 16, further comprising a microphone mounted in one of the abutment projections (212,213).

18. A mobile phone (10) for multimedia with a cradling function comprising:
a data output device;
a data input device rotatably connected to the data output device about a hinge axis (A), top and bottom surfaces of the data input device being reversed upside down according to rotation of the data input device regardless of opening and closing of the data output device, so the data input device and the data output device are oriented at an incline in relation to each other; and
a cradle unit (300) comprising one or more hinge surfaces (310,320) for cradling the data output device at an incline in relation to the data input device.

19. A mobile phone as claimed in claim 18, wherein the cradle unit (300) further comprises:
a first hinge surface formed on a side surface of the data output device, which is opposed to the data input device;
a second hinge surface formed on a side surface of the data input surface, which is opposed to the data output device, the second hinge surface being complementary with the first hinge surface; and
a hinge module (H) mounted through the first and second hinge surfaces (310,320) to provide a drive source.

20. A mobile phone as claimed in claim 18 or 19, wherein a battery pack is contained in the data input device to provide stability for cradling the data output device.
